# EUROPEAN PATENT APPLICATION

(11) **EP 1 990 825 A2**
(43) Date of publication of application: **12.11.2008**
(21) Application number: 08155568.2
(22) Date of filing: 02.05.2008
(51) Int. Cl.: H01J 17/16, H01J 17/49

(54) **External light shielding sheet and plasma display panel device having the same**

(30) Priority: 03.05.2007 KR 20070043221
(71) Applicant: LG Electronics Inc., Seoul 150-721 (KR)
(72) Inventor: Cha, Hong Rae, 137-724, SEOUL (KR); Sohn, Ji Hoon, 137-724, SEOUL (KR); Shin, Woon Seo, 137-724, SEOUL (KR); Seo, Eun Seong, 137-724, SEOUL (KR); Moon, Joon Kwon, 137-724, SEOUL (KR)
(74) Representative: Cabinet Plasseraud

(57) **Abstract**

The present invention relates to an external light shielding sheet and a plasma display panel device having the external light shielding sheet. The plasma display panel device of the present invention includes: a plasma display panel; and an external light shielding sheet having a base portion having a groove, and a pattern portion formed in the groove of the base portion, wherein an upper end of the pattern portion is arranged nearer the panel than a lower end of the pattern portion, the lower end being broader in width than the upper end.

## Description

### BACKGROUND OF THE INVENTION

### 1. Field of the Invention

The present invention is directed to a plasma display panel device, especially which has an external light shielding sheet arranged on the front surface of its panel to shield light incident onto the panel from an external light source and maintain its brightness constant.

### 2. Description of the Conventional Art

A plasma display panel (PDP) is a type of flat panel display now commonly used for large TV displays (typically above 37-inch or 940 mm). Many tiny cells located between two panels of glass hold an inert mixture of noble gases (neon and xenon). The gas in the cells is electrically turned into plasma upon a gas discharge, which then excites phosphors to emit light. Plasma display panels (PDP) have a light weight and can be produced in fairly large and slim sizes. They can implement very broad horizontal view angle, a full color, and high brightness.

In the conventional plasma display panels, external light is reflected from the front surface of the panel due to white phosphors exposed outwards from the lower plate of the panel. Therefore, such reflection caused black images to look slightly bright black or darkish which, which led to lowering of contrast.

### SUMMARY OF THE INVENTION

An aspect of the present invention provides an external light shielding sheet that may effectively shield light incident onto the panel from an external light source to improve the contrast of the panel, improve the brightness, and reduce ghost phenomena, and a plasma display panel device having the external light shielding sheet.

According to an exemplary embodiment of the present invention, a plasma display panel device is provided, including: a plasma display panel; and an external light shielding sheet having a base portion having a groove, and a pattern portion formed in the groove of the base portion, wherein an upper end of the pattern portion is arranged nearer the panel than a lower end of the pattern portion. The lower end is broader in width than the upper end.

According to another exemplary embodiment of the present invention, an external light shielding sheet arranged on a front surface of a display panel is provided, including: a base portion having a groove; and a pattern portion formed in the groove of the base portion, the pattern portion being larger in refractive index than the base portion, wherein an upper end of the pattern portion is arranged nearer the panel than a lower end of the pattern portion, the lower end being broader in width than the upper end.

### BRIEF DESCRIPTION OF THE DRAWING

The accompany drawings, which are comprised to provide a further understanding of the invention and are incorporated on and constitute a part of this specification illustrate embodiments of the invention and together with the description serve to explain the principles of the invention.
FIG. 1 is a perspective view illustrating a plasma display panel according to an exemplary embodiment of the present invention;
FIG. 2 is a cross sectional view illustrating an external light shielding sheet according to an exemplary embodiment of the present invention;
FIGS. 3 to 6 are cross sectional views illustrating an exemplary external light shielding sheet according to an exemplary embodiment;
FIG. 7 is a cross sectional view illustrating an exemplary external light shielding sheet included in a filter according to an exemplary embodiment of the present invention;
FIGS. 8 and 9 are views illustrating exemplary pattern portions provided in a line within a base portion of an external light shielding sheet, wherein the pattern portions may be spaced from each other by a prescribed distance;
FIGS. 10 and 11 are views illustrating exemplary black matrixes formed on a panel according to an exemplary embodiment of the present invention;
FIG. 12 is a cross sectional view illustrating an exemplary bus electrode formed on the upper substrate of the plasma display panel according to an exemplary embodiment of the present invention;
FIGS. 13 and 14 are cross sectional views illustrating an exemplary barrier rib formed on the lower substrate of the plasma display panel according to an exemplary embodiment of the present invention, wherein the barrier rib includes vertical barrier ribs 720 and horizontal barrier ribs 700 and 710;
FIGS. 15 to 19 are cross sectional views illustrating exemplary pattern portions of an external light shielding sheet according to an exemplary embodiment of the present invention;
FIGS. 20 to 22 are a cross sectional view illustrating exemplary pattern portions according to an exemplary embodiment, wherein the lower ends are flat or depressed.
FIG. 23 is a cross sectional view illustrating an exemplary pattern portion according to an exemplary embodiment of the present invention, wherein its lower end has been depressed and located near the viewer;
FIG. 24 is a cross sectional view illustrating an exemplary pattern portion according to an exemplary embodiment, wherein its lower ended has been depressed;
FIG. 25 is a cross sectional view illustrating an exemplary pattern portion according to an exemplary embodiment, the pattern portion has been shaped as a trapezoid;
FIG. 26 is a cross sectional view illustrating an exemplary external light shielding sheet according to an exemplary embodiment of the present invention, wherein it can be seen how the thickness of the external light shielding sheet is associated with the height of the pattern portion; and
FIGS. 27 to 30 are cross sectional views illustrating an exemplary filter according to an exemplary embodiment of the present invention, wherein the filter, located on the front surface of the plasma display panel, may include an AR/NIR sheet, an EMI shielding sheet, an external light shielding sheet, and a light property sheet.

### DETAILED DESCRIPTION OF THE PREFERRED EMBODIMENT

Hereinafter, exemplary embodiments of the present invention will be described with reference to accompanying drawings.

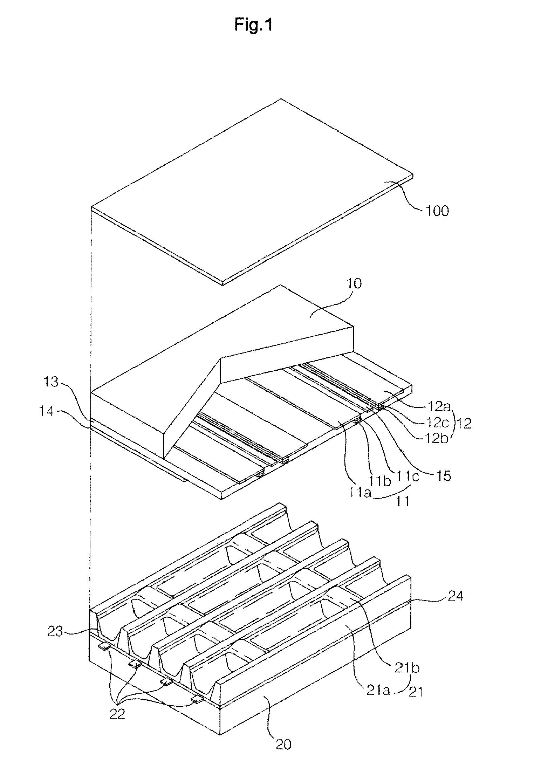

FIG. 1 is a perspective view illustrating a plasma display panel according to an exemplary embodiment of the present invention.

Referring to FIG. 1, the plasma display panel includes an upper substrate on which a pair of sustain electrodes are arranged and a lower substrate 20 on which an address electrode 22 is arranged. The pair of sustain electrodes include a scan electrode 11 and a sustain electrode 12.

The sustain electrode 11 includes a transparent electrode 11a that is made of indium-tin-oxide (ITO), and a bus electrode 11 b. The sustain electrode 12 includes a transparent electrode 12a that is made of indium-tin-oxide (ITO), and a bus electrode 12b. The bus electrodes 11 b and 12b may be formed in a single layer of a metal such as Ag or Cr, or in a multi-layer of Cr/Cu/Cr or Cr/Al/Cr. The bus electrodes 11 band 12b are arranged on the transparent electrodes 11a and 12a, respectively, to reduce the voltage drop by the transparent electrodes 11a and 12a that have a high resistance.

The pair of sustain electrodes 11 and 12 may be formed only of the bus electrodes 11 b and 12b without the transparent electrodes 11 a and 12a. This may reduce costs required to manufacture the panel. The bus electrodes 11 b and 12b may be made of various materials including photosensitive materials, as well as the materials enumerated above.

A black matrix may be arranged between the transparent electrode 11 a and the bus electrode 11 b and between the transparent electrode 12a and the bus electrode 12b. The black matrix functions to absorb the external light to reduce its reflection and improve the purity and contrast of the upper substrate 10.

The black matrix includes a first black matrix 15 and second black matrixes 11c and 12c. The first black matrix 15 is arranged on the upper substrate 10 to overlap a barrier rib 21. The second black matrix 11c is arranged between the transparent electrode 11a and the bus electrode 11 b. The second black matrix 12c is arranged between the transparent electrode 12a and the bus electrode 12b. The second black matrixes 11c and 12c are also called "black layers" or "black electrode layers". The first black matrix 15 may be formed together with the second black matrixes 11c and 12c so that the first black matrix 15 and the second black matrixes 11c and 12c may be physically connected to each other. The first black matrix 15 may be formed separately from the second black matrixes 11c and 12c, wherein the first black matrix 15 may be physically disconnected from the second black matrixes 11c and 12c.

In a case where the first black matrix 15 is formed to be connected to the second black matrixes 11c and 12c, the first black matrix 15 and the second black matrixes 11c and 12c may be formed of the same material. In a case where the first black matrix 15 is formed to be disconnected from the second black matrixes 11c and 12c, the first black matrix 15 and the second black matrixes 11c and 12c may be formed of the different materials.

The bus electrodes 11 b and 12b or barrier rib 21 colored with some dark colors may have the same functions as those of the black matrixes, such as light-shielding or contrast-improving. Or, making the color of a dielectric layer 13 complementary to the color of the barrier rib 21 may enable the combination of the dielectric layer 13 and the barrier rib 21 to function as a black matrix since the combination looks dark as seen from the panel.

An upper dielectric layer 13 and a protective layer 14 are sequentially arranged on the upper substrate 10 to cover the scan electrode and sustain electrode 12. Charged particles generated upon a gas discharge are accumulated in the upper dielectric layer 13, and this may prevent the pair of sustain electrodes 11 and 12. The protective layer 14 protects the upper dielectric layer 13 from the occurrence of sputtering by the charged particles, and raises the discharge efficiency of secondary electrons.

Or, the address electrode 22 is formed to intersect the scan electrode 11 and sustain electrode 12. A lower dielectric layer 24 and a barrier rib 21 are formed on the lower substrate 20 to cover the address electrode 22.

A phosphor layer 23 is formed on the lower dielectric layer 24 and the barrier rib 21. The barrier rib 21 includes a vertical barrier rib 21a and a horizontal barrier rib 21 b that intersects the vertical barrier rib 21 a. The vertical barrier rib 21 and the horizontal barrier rib 21 b define a discharge cell. The barrier rib 21 prevents visible rays and ultraviolet rays generated by a gas discharge from leaking from a discharge cell to its neighboring discharge cells.

As shown in FIG. 1, a filter 100 may be arranged over the panel. The filter 100 may include an anti-reflection (AR) sheet, a near infrared (NIR) shielding sheet, an electromagnetic interference (EMI) shielding filter, a diffusion sheet, and an optical sheet.

When the filter 100 is arranged to be spaced from the panel by about 10µm to about 30µm, external light may be effectively shielded and light generated from the panel may be effectively emitted outwards. The filter 100 may be spaced from the panel by about 30µm to 120µm to protect the panel from external pressure. An adhesive layer may be further arranged between the filter 100 and the panel to protect the panel from external impacts.

The barrier rib 21 may have various structures other than the structure illustrated in FIG. 1. For example, the barrier rib 21 may be configured so that the vertical barrier rib 21 a is different in height from the horizontal barrier rib 21 b-this is called "height-different type barrier rib". The barrier rib 21 may be also configured so that at least one of the vertical barrier rib 21 a and the horizontal barrier rib 21 b has a channel that can be used as an exhaust gas pathway- this is called "channel type barrier rib". The barrier rib 21 may be configured so that at least one of the vertical barrier rib 21 a and the horizontal barrier rib 21 b has a hollow-this is called "hollow type barrier rib".

In the height-different type barrier rib, the horizontal barrier rib 21 b may be higher in height than the vertical barrier rib 21 a. In the channel type barrier rib or hollow type barrier rib, a channel or hollow may be formed in the horizontal barrier rib 21 b.

Although red, green, and blue discharge cells are arranged on the same line in this exemplary embodiment of the present invention, they may be arranged in various manners. For example, red, green, and blue discharge cells may be arranged in a shape of the Greek leter "Δ". And, the discharge cell may be shaped as a pentagon, a hexagon, as well as a tetragon.

The phosphor layer 23 may be excited by ultraviolet rays generated upon a gas discharge to emit visible light including red light, green light, and blue light. A mixed inert gas of He+Xe, Ne+Xe, or He+Ne+Xe is injected into a discharge space prepared between the barrier ribs 21.

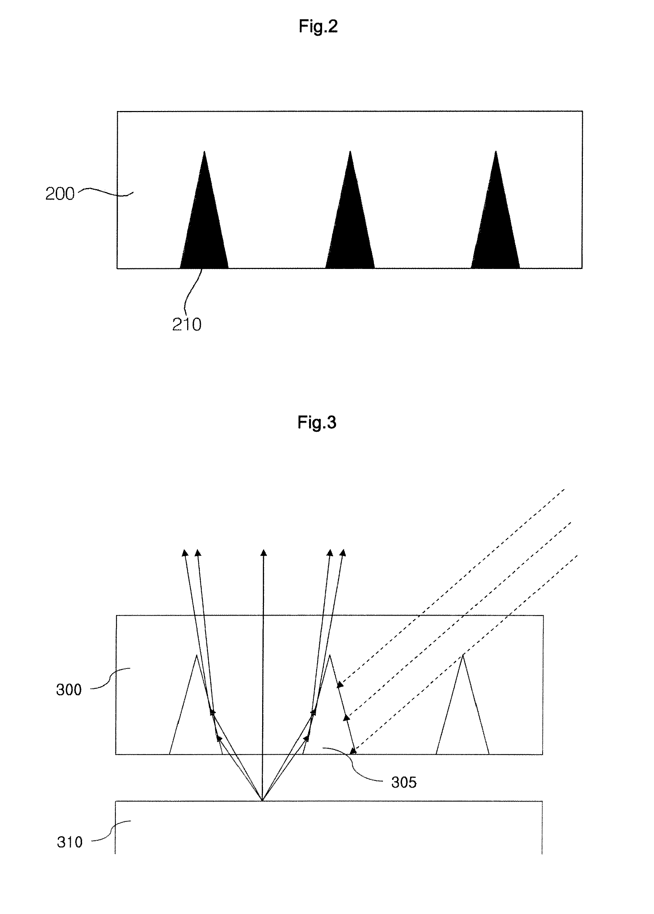

FIG. 2 is a cross sectional view illustrating an external light shielding sheet according to an exemplary embodiment of the present invention. The external light shielding sheet includes a base portion 200 and a pattern portion 210

The base portion 200 may be made of a transparent plastic material, such as a UV-curable resin based material through which light may pass. The base portion 200 may be made of glass to enhance the panel protection.

Referring to FIG. 2, the pattern portion 210 may be formed into various shapes, such as a triangle. The pattern portion 210 may be made of a material darker than the base portion 200. The pattern portion 210 may be made of a black material. For example, the black material may include a carbon-based material or a material coated with a black dye to maximize the absorption of external light. Hereinafter, "lower end" of the pattern portion 210 refers to a part of the pattern portion 210 having the maximum width, and "upper end" another part of the pattern portion 210 having the minimum width, i.e. the peak of the pattern portion 210.

As shown in FIG. 2, the lower end of the pattern portion 210 may be arranged near the panel, the upper end near a viewer, and vice versa.

An external light source is commonly arranged over the panel, and therefore, external light is diagonally incident onto the panel and absorbed into the pattern portion 210.

The pattern portion 210 may include light-absorption particles that may be resin-based particles colored with a specific color. The light-absorption particles may be colored with black to maximize the light absorption effect.

The diameter of a light-absorption particle may be more than about 1 µm to facilitate the manufacture of the light-absorption particles and insertion of them into the pattern portion 210 and maximize the light absorption effect. In a case where the light-absorption particle has a diameter of more than about 1µm, the pattern portion 210 may contain the light-absorption particles more than about 10 wt% to effectively absorb the external light. That is, the pattern portion 210 may contain the light-absorption particles more than about 10% with respect to its entire weight.

FIGS. 3 to 6 are cross sectional views illustrating an exemplary external light shielding sheet according to an exemplary embodiment.

FIG. 3 illustrates a case where the pattern portion 305, more specifically, an inclined surface of the pattern portion 305, is smaller in refractive index than the base portion 300 in order to absorb the external light and total-reflect the visible light emitted from the panel to raise its reflectivity.

As described above, a light source (not shown) emitting the external light that causes lowering of contrast of the panel is generally located above the panel. Referring to FIG. 3, the external light, which is represented with dotted lines, is diagonally incident onto the external light shielding sheet according to Snell's law, and refracted and absorbed into the pattern portion 300 having a refractive index smaller than that of the base portion 300. More specifically, the external light is refracted in the pattern portion 305 and absorbed into the light-absorption particles.

The light represented with solid lines, which is emitted outward from the panel 310 to create images, is total-reflected from the inclined surface of the pattern portion 305 toward the viewer.

A reason why the external light that is represented with dotted-lines are refracted and absorbed in the pattern portion 305 and the light emitted from the panel 310 that is represented with solid lines is total-reflected by the pattern portion 305 is that the angle between the inclined surface of the pattern portion 305 and the light emitted from the panel 310 is smaller than the angle between the external light and the inclined surface of the pattern portion 305.

Accordingly, the external light shielding sheet of the present invention may absorb the external light so that the external light is not reflected toward the viewer and increase the reflectivity of the light emitted from the panel 310, which may lead to improvement in contrast.

Taking into consideration the angle of the external light incident onto the panel 310, the refractive index of the pattern portion 305 may be more than about 0.3 times and less than about 1 time of the refractive index of the base portion 300 in order to maximize the absorption of the external light and the total-reflection of the light emitted from the panel 310. Considering the vertical view angle of the plasma display panel, the refractive index of the pattern portion 305 may be about 0.3 times to about 0.8 times of the refractive index of the base portion 300 to maximize the total-reflection by the inclined surface of the pattern portion 305 of the light emitted from the panel 310.

In a case where the upper end of the pattern portion 305 is arranged near the viewer and the refractive index of the pattern portion 305 is smaller than that of the base portion 300, the light emitted from the panel 310 is reflected by the inclined surface of the pattern portion 305 toward the viewer, which may give rise to ghost phenomena that cause an image to look dispersed and blurred as seen from the viewer.

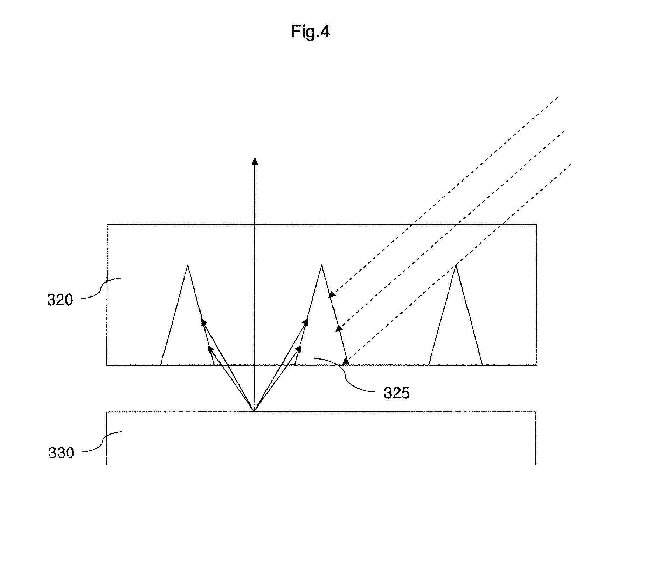

FIG. 4 illustrates a case where the upper end of the pattern portion 325 is arranged near the viewer and the refractive index of the pattern portion 325 is larger than that of the base portion 320. Referring to FIG. 4, the external light incident onto the pattern portion 325 and the light emitted from the panel 310 are all absorbed into the pattern portion 325 based on Snell's law since the refractive index of the pattern portion 325 is larger than that of the base portion 320.

Accordingly, it can be seen that ghost phenomena can be reduced as the upper end of the pattern portion 325 is located near the viewer and the pattern portion 325 has a smaller refractive index than the base portion 320. A difference in refractive index between the pattern portion 325 and the base portion 320 may be more than about 0.05 to prevent the occurrence of ghost phenomena by sufficiently absorbing the light emitted from the panel 310 and diagonally incident onto the pattern portion 325.

If the refractive index of the pattern portion 325 is larger than that of the base portion 320, the transmittance and contrast of the external light shielding sheet may decrease, and therefore, a difference in refractive index between the pattern portion 325 and the base portion 320 may range from about 0.05 to about 0.3 to prevent ghost phenomena and lowering of the transmittance of the external light shielding sheet. To prevent ghost phenomena and maintain the contrast at a proper level, the refractive index of the pattern portion 325 may be about 1.0 times to about 1.3 times of the refractive index of the base portion 320.

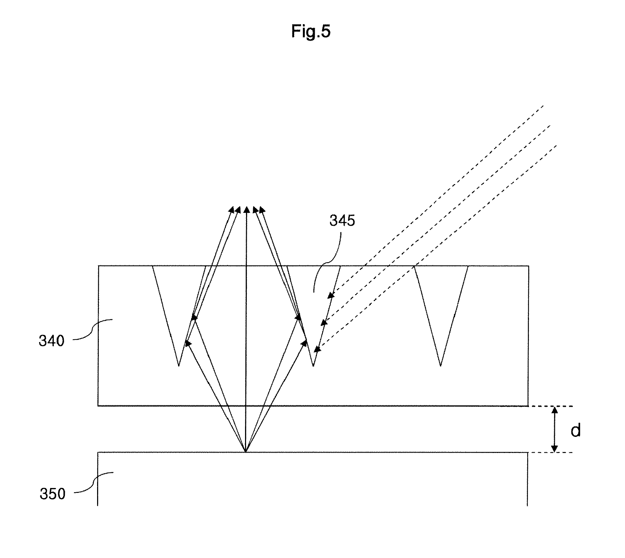

FIG. 5 illustrates a case where the lower end of the pattern portion 345 is arranged near the viewer and the refractive index of the pattern portion 345 is smaller than that of the base portion 340. If the lower end of the pattern portion 345 is arranged near the viewer so that the external light is absorbed into the pattern portion 345 through the lower end, the external shielding effect improves. Making the interval between two adjacent lower ends larger than that shown in FIG. 4 may improve the aperture ratio of the external light shielding sheet.

Referring to FIG. 5, the light emitted from the panel 350 may be reflected by the inclined surface of the pattern portion 345 and converged into a light beam that has passed through the base portion 340 perpendicularly from the panel 350. Accordingly, ghost phenomena may be reduced without considerable lowering in transmittance of the external light shielding sheet.

For this purpose, an interval (d) between the panel 350 and the external light shielding sheet may be about 1.5mm to about 3.5mm.

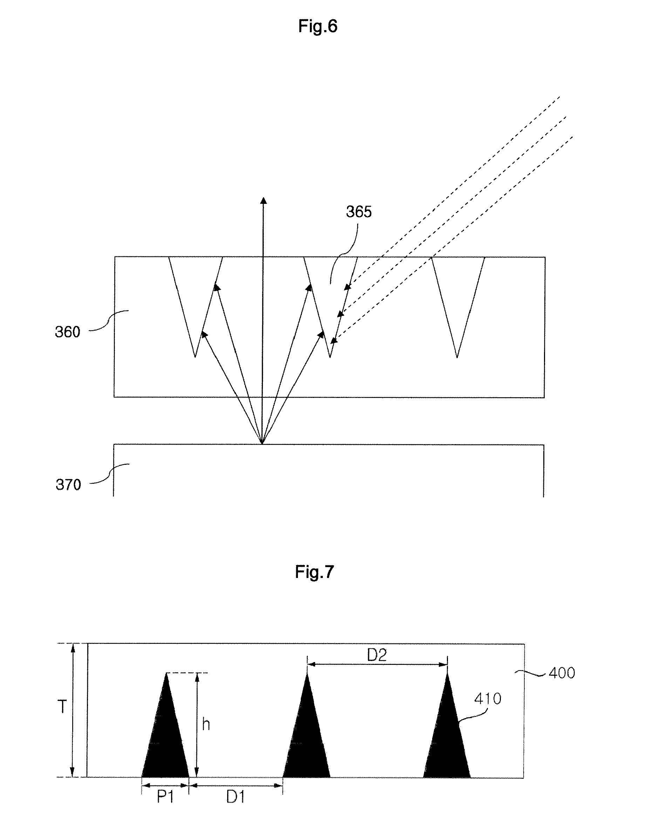

FIG. 6 illustrates a case where the lower end of the pattern portion 365 is arranged near the viewer and the refractive index of the pattern portion 365 is larger than that of the base portion 360. Referring to FIG. 6, since the refractive index of the pattern portion 365 is larger than that of the base portion 360, the light emitted from the panel onto the inclined surface of the pattern portion 365 may be absorbed into the pattern portion 365. Accordingly, image may be created by a light beam that has been emitted from the panel and passed through the base portion 360, which may reduce the occurrence of ghost phenomena.

In addition, since the refractive index of the pattern portion 365 is larger than that of the base portion 360, the external light absorption effect may improve.

FIG. 7 is a cross sectional view illustrating an exemplary external light shielding sheet included in a filter according to an exemplary embodiment of the present invention. The external light shielding sheet may have a thickness (T) of about 20µm to about 250µm to facilitate its manufacturing processes and have a proper light transmittance. The thickness (T) of the external light shielding sheet may range from about 100µm to about 180µm to enable the light emitted from the panel to be easily transmitted, the external light to be effectively refracted and absorbed, and the external light shielding sheet to be more secure.

Referring to FIG. 7, the pattern portion 410, arranged in the base portion 400 may be shaped as a triangle, for example, an equilateral triangle. The width (P1) of the lower end of the pattern portion 410 may range from about 18µm to about 36µm to ensure an aperture ratio by which the light emitted from the panel may be smoothly directed toward the viewer and maximize the external light shielding efficiency.

The height (h) of the pattern portion 410 may be in a range of about 80µm to about 170µm to prevent the occurrence of short circuits in the pattern portion 410 and endow the inclined surface of the pattern portion 410 with a slope by which the absorption of the external light and the reflection of the light emitted from the panel may be effectively carried out with respect to the width (P1).

A distance (D1) between two adjacent lower ends of the pattern portions and a distance (D2) between two adjacent upper ends of the pattern portions may be in a range of about 40µm to about 90µm and about 90µm to about 130µm, respectively, to ensure an aperture ratio by which the light emitted from the panel is directed toward the viewer to create an image having a proper brightness and provide an optimum slope of the inclined surface of the pattern portion 410 to increase the external light shielding effect and reflecting efficiency of the light emitted from the panel.

For example, when the distance (D1) is in a range of about 1.1 times to about 5 times of the width (P1), an aperture ratio may be secured to be suitable for displaying images. The distance (D1) may range from about 1.5 times to about 3.5 times of the width (P1) to optimize the external light shielding effect and the reflection effect of the light emitted from the panel, as well as to secure a proper aperture ratio.

The height (h) may be within about 0.89 times to about 4.25 times of the distance D1 to prevent the external light that diagonally comes from a light source (not shown) located over the panel from being incident onto the panel. The height (h) may be within about 1.5 times to about 3 times of the distance D1 to prevent the occurrence of short circuits in the pattern portion 410 and optimize the reflection efficiency of the light emitted from the panel.

In addition, when the distance (D2) is within about 1 time to about 3.25 times of the distance D1, an aperture ratio may be secured that may endow an image to be displayed with a proper aperture ratio. The distance (D2) may be within about 1.2 times to about 2.5 times of the distance (D1) to optimize the reflection efficiency by which the light emitted from the panel is total-reflected by the inclined surface of the pattern portion 410.

Although it has been described that the upper end of the pattern portion 410 is arranged near the viewer, the present invention is not limited thereto. For example, the present invention may apply to a case where the lower end of the pattern portion 410 is arranged near the viewer.

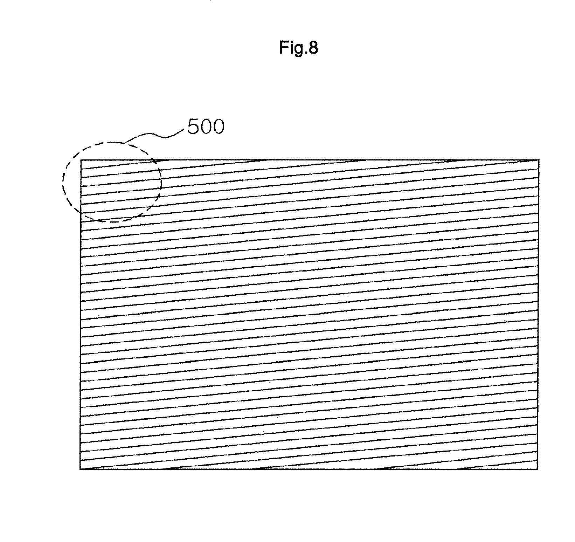

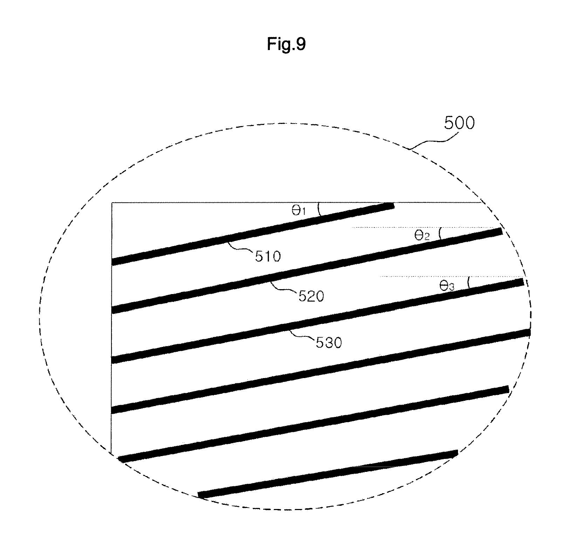

FIGS. 8 and 9 illustrate a front side of exemplary pattern portions provided in a line within a base portion of an external light shielding sheet, wherein the pattern portions may be spaced from each other by a prescribed distance.

The overlap of the pattern portions formed to be spaced from each other by a prescribed interval in the external light shielding sheet and a black matrix, a black layer, a bus electrode, and a barrier rib formed to have a prescribed pattern in the panel may cause moiré patterns. A moiré pattern is an interference pattern created, for example, when two grids are overlaid at an angle, or when they have slightly different mesh sizes.

As shown in FIGS. 8 and 9, moiré patterns may be reduced by giving a slope to the pattern portions.

Since black matrixes 610 are formed on the upper substrate of the panel in parallel with horizontal barrier ribs formed on the lower substrate of the panel, the black matrixes are in parallel with the upper end or lower end of the external light shielding sheet shown in FIGS. 8 and 9. According, angles ⊖₁, ⊖₂, and ⊖₃ between the pattern portions and the upper end of the external light shielding sheet are equal to angles between the pattern portions and black matrixes.

Moiré patterns may be reduced when the pattern portions are angled with the black matrixes less than about 20 degrees. Taking it into consideration that a light source that emits the external light is commonly located over the viewer's head, it can be possible to prevent moiré patterns and ensure a proper aperture ratio to increase the reflection efficiency of the light emitted from the panel, as well as to effectively shield the external light, when the angles between the pattern portions and the black matrixes are less than about 5 degrees.

FIG. 9 is an enlarged viewer of a part of the external light shielding sheet shown in FIG. 8, wherein the pattern portions 510, 520, 530, 540, 550, and 560 may be arranged in parallel with each other, or although the pattern portions are not arranged in parallel with each other, the angles between the pattern portions and the black matrixes may belong to the above ranges.

For the reason described above, moiré patterns may be reduced when angles ⊖₁, ⊖₂, and ⊖₃ between the pattern portions formed in the external light shielding sheet and the bus electrodes formed on the upper substrate of the panel or horizontal barrier ribs formed on the lower substrate of the panel are less than about 20 degrees. Taking it into consideration that a light source that emits the external light is commonly located over the viewer's head, it can be possible to prevent moiré patterns and ensure a proper aperture ratio to increase the reflection efficiency of the light emitted from the panel, as well as to effectively shield the external light, when the angles Θ₁, Θ₂, and Θ₃ between the pattern portions and the bus electrodes or black matrixes are less than about 5 degrees.

Although a case has been described where the pattern portions are diagonally arranged from a lower and left corner of the external light shielding sheet to an upper and right corner as shown in FIGS. 8 and 9, the present invention is not limited thereto. For example, a case can be possible, where the pattern portions are arranged diagonally from an upper and left corner of the external light shielding sheet to a lower and right corner to have the above angles.

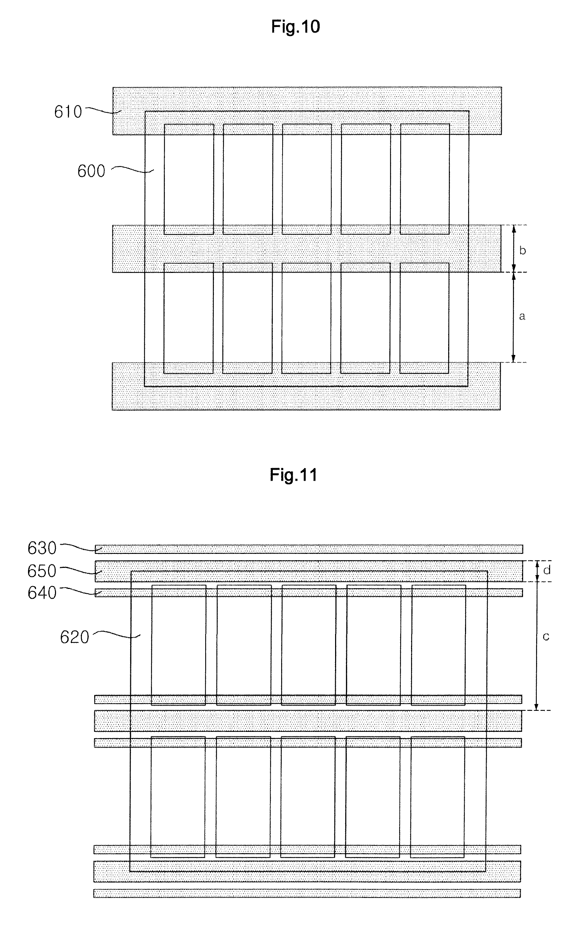

FIGS. 10 and 11 illustrate exemplary black matrixes formed on a panel according to an exemplary embodiment of the present invention.

Referring to FIG. 10, the black matrix 610 may overlap a horizontal barrier rib formed on the lower substrate 600. Or, the black matrix 610 may overlap a scan electrode and a sustain electrode formed on the upper substrate, so that the scan electrode and the sustain electrode may be covered with the black matrix 610.

A width (b) of the black matrix 610 may range from about 200µm to about 400µm and an interval (a) with its adjacent black matrix may range from about 300µm to about 600µm to ensure a proper aperture ratio to endow an image with a proper brightness and absorb the external light to enhance the light shielding effect, and purity and contrast of the upper substrate.

Referring to FIG. 11, the black matrix 650 may be spaced from the scan electrode 630 and sustain electrode 640 formed on the upper substrate of the panel.

A width (d) of the black matrix 650 may range from about 70µm to about 150µm and an interval (c) with its adjacent black matrix may range from about 500µm to about 800µm to ensure a proper aperture ratio to endow an image with a proper brightness and absorb the external light to enhance the light shielding effect, and purity and contrast of the upper substrate.

As described above, moiré patterns may occur when the pattern portions of the external light shielding sheet overlap the black matrixes formed on the upper substrate of the panel.

When a width of the black matrix is in a range of about 3 times to about 15 times of a width (P1) of the pattern portion, it can be possible to prevent the moiré patterns, ensure a proper aperture ratio for the panel, and maximize the external light shielding effects. When an interval between two adjacent black matrixes is in a range of about 4 times to about 12 times of an interval (D1) between two adjacent pattern portions, it can be possible to reduce the moiré patterns as well as to optimize the reflection efficiency by which the light emitted from the panel passes through between the black matrixes and reflects outwards by an inclined surface of the pattern portion.

In a case where the black matrix 610 overlap the scan electrode and the sustain electrode as shown in FIG. 10, it can be possible to prevent the moiré patterns, ensure a proper aperture ratio for the panel, and maximize the external light shielding effects when the width (b) of the black matrix 610 is in a range of about 10 times to about 15 times of the width (P1) of the pattern portion, and it can be possible to reduce the moiré patterns as well as to optimize the reflection efficiency of the light emitted from the panel when the interval (a) between two adjacent black matrixes is in a range of about 4 times to about 9 times of the interval between two adjacent pattern portions.

In a case where the black matrix 650 is spaced from the scan electrode and the sustain electrode as shown in FIG. 11, it can be possible to prevent the moiré patterns, ensure a proper aperture ratio for the panel, and maximize the external light shielding effects when the width (d) of the black matrix 650 is in a range of about 3 times to about 7 times of the width (P1) of the pattern portion, and it can be possible to reduce the moiré patterns as well as to optimize the reflection efficiency of the light emitted from the panel when the interval (c) between two adjacent black matrixes is in a range of about 7 times to about 12 times of the interval between two adjacent pattern portions.

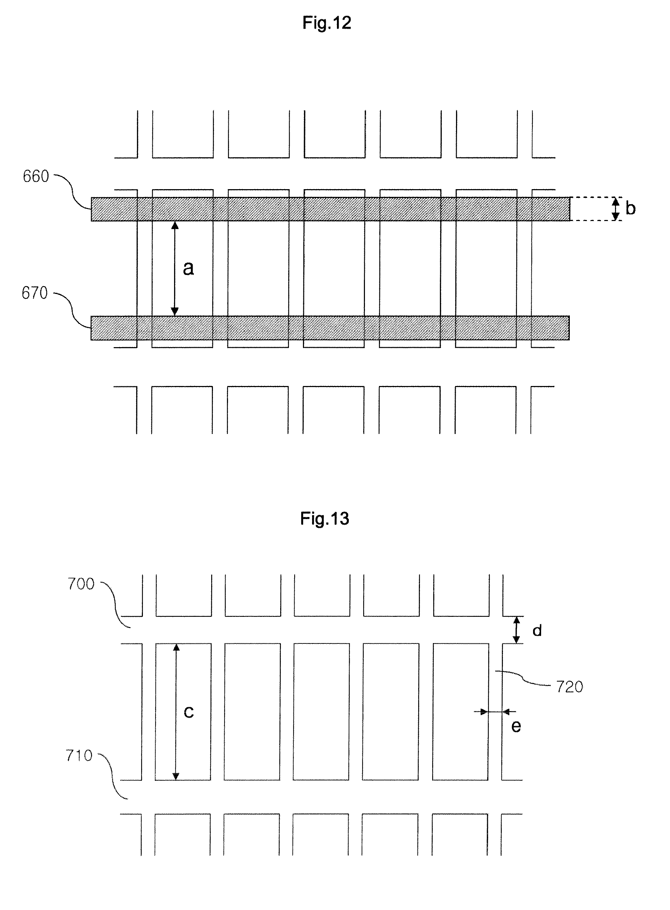

FIG. 12 is a cross sectional view illustrating an exemplary bus electrode formed on the upper substrate of the plasma display panel according to an exemplary embodiment of the present invention.

As described above with reference to FIG. 7, the interval between two adjacent pattern portions of the external light shielding sheet may be about 40µm to about 90µm, and the interval (a) between two adjacent bus electrodes 660 and 670 may be about 225µm to about 480µm to ensure an aperture ratio to confer a proper brightness to an image, as well as to lower the discharge initiation voltage Accordingly, when the interval (a) corresponds to about 2.5 times to about 12 times of the interval between two adjacent pattern portions, it can be possible to ensure a proper aperture ratio for the panel, maximize the external light shielding efficiency, and optimize the reflection efficiency of the light emitted from the panel.

The interval between two adjacent pattern portions may be about to about and the interval (a) between two adjacent bus electrodes 660 and 670 may be about to about to reduce moiré patterns that may occur when the pattern portions of the external light shielding sheet overlap the bus electrodes of the panel. Accordingly, when the interval (a) corresponds to about 4 times to about 10 times of the interval between two adjacent pattern portions, it can be possible to ensure a proper aperture ratio for the panel, maximize the external light shielding efficiency, and optimize the reflection efficiency of the light emitted from the panel, as well as to reduce moiré patterns.

As described above with reference to FIG. 7, the width of the lower end of the pattern portion may be about 18µm to about 35µm, and the width (b) of the bus electrode 660 may be about 45µm to about 90µm to ensure resistance and capacitance adapted to drive the panel, as well as an aperture ratio to confer a proper brightness to an image. Accordingly, the width of the lower end of the pattern portion may be about 0.2 times to about 0.8 times of the width (b) of the bus electrode 660 to ensure resistance and capacitance adapted to drive the panel, as well as an aperture ratio to confer a proper brightness to an image.

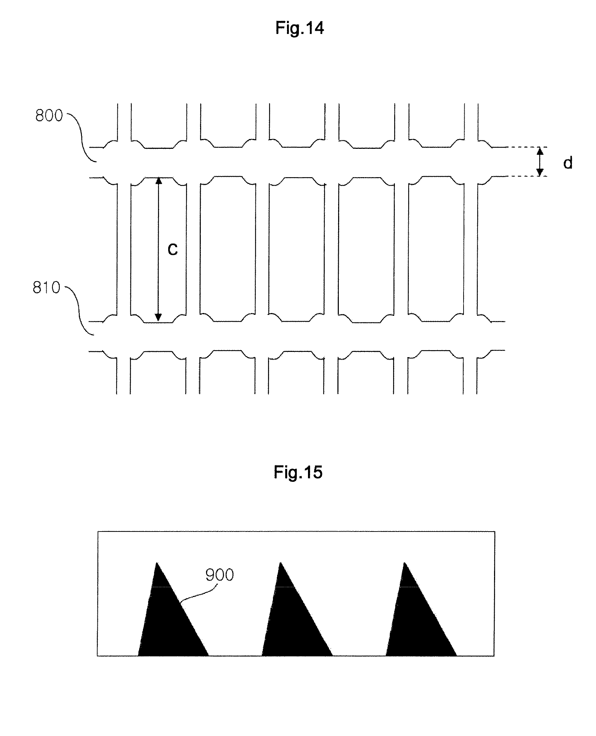

FIGS. 13 and 14 are cross sectional views illustrating an exemplary barrier rib formed on the lower substrate of the plasma display panel according to an exemplary embodiment of the present invention, wherein the barrier rib includes vertical barrier ribs 720 and horizontal barrier ribs 700 and 710. The vertical barrier rib 720 intersects the bus electrode formed on the upper substrate of the panel. The horizontal barrier ribs 700 and 710 intersect the vertical barrier rib 720.

The interval (c) between two adjacent horizontal barrier ribs 700 and 710 may be about 540µm to about 800µm in terms of proper brightness and resolution of an image. Accordingly, the interval (c) may be about 6 times to about 20 times of an interval between two adjacent pattern portions taking it into consideration that the interval between two adjacent pattern portions may be about 40µm to about 90µm to ensure a proper aperture ratio for the panel and increase the external light shielding effect and the reflection efficiency of the light emitted from the panel.

It can be possible to reduce moiré patterns that may occur when the pattern portions overlap the horizontal barrier ribs in a case where the interval between two adjacent pattern portions is about 40µm to about 60µm and the interval (c) between the horizontal barrier ribs 700 and 710 is about 600µm to about 700µm. Accordingly, when the interval (c) corresponds to about 10 times to about 17.5 times of the interval between two adjacent pattern portions, it can be possible to absorb the external light to enhance the light shielding effect, and purity and contrast of the upper substrate, as well as to reduce moiré patterns.

As described above with reference to FIG. 7, the width of the lower end of the pattern portion may be about 18µm to about 35µm, and the width (d) of the horizontal barrier rib 700 may be about 45µm to about 90µm to ensure an aperture ratio to confer a proper brightness to an image Accordingly, the width of the lower end of the pattern portion may be about 0.2 times to about 0.8 times of the width (d) of the horizontal barrier rib 700 to ensure an aperture ratio for the panel to confer a proper brightness to an image.

Referring to FIG. 14, a part of the barrier ribs 800 and 810 may be different in width from the other parts. In a case where the horizontal barrier ribs 800 and 810 are configured as shown in FIG. 14, the interval (c) between two adjacent horizontal barrier ribs 800 and 810 and the width (d) of the horizontal barrier rib 800 may be defined with respect to a straight-extended portion of the barrier ribs.

FIGS. 15 to 19 are cross sectional views illustrating exemplary pattern portions of an external light shielding sheet according to an exemplary embodiment of the present invention.

Referring to FIG. 15, the pattern portion 900 may be formed to be asymmetrical with respect to a vertical central line. That is, the left and right parts of the pattern portion 900 may be different in area from each other, or the angle between the left inclined surface of the pattern portion 900 and the lower end of the pattern portion 900 may be different from the angle between the right inclined surface of the pattern portion 900 and the lower end of the pattern portion 900. Since a light source emitting the external light is commonly located over the panel, the external light is incident onto the panel from the light source at a prescribed angle. Accordingly, the slope of an upper inclined surface may be smaller than the slope of a lower inclined surface to increase the external light absorption effects and the reflectivity of the light emitted from the panel.

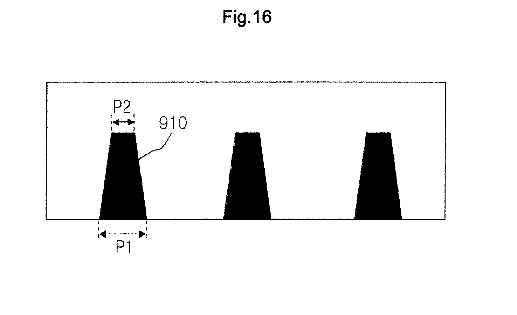

Referring to FIG. 16, the pattern portion 910 may be shaped as a trapezoid, wherein the width (P2) of its upper end may be smaller than the width (P1) of its lower end.

The width (P2) may be 10µm or less, which permits the pattern portion 910 to have a slope by which the absorption of the external light and the reflection of the light emitted from the panel may effectively take place with respect to the width (P1).

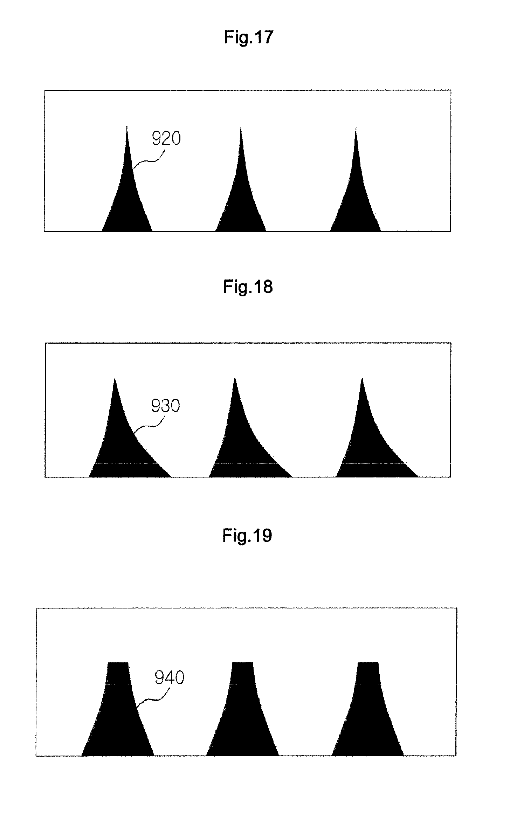

Referring to FIGS. 17 to 19, the pattern portions 920, 930, and 940 may be configured so that the left and right inclined surfaces form a hyperbolic curve. In this case, the variation in slope of the inclined surfaces of the pattern portions 920, 930, and 940 may decrease as going from lower end to upper end to effectively shield the external light diagonally incident onto the pattern portions.

The pattern portion may be configured so that its edge forms a curve with a prescribed curvature.

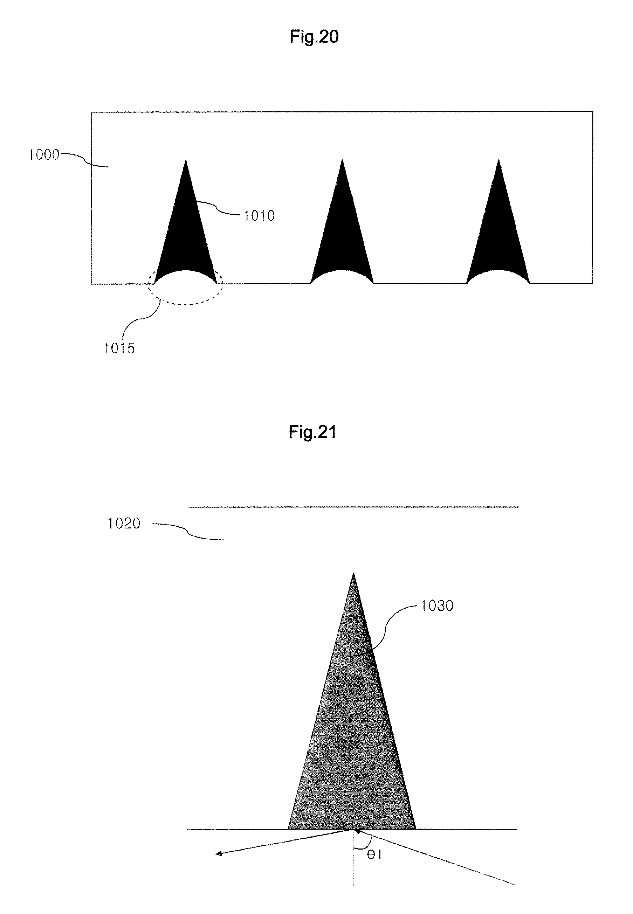

FIG. 20 illustrates an exemplary pattern portion according to an exemplary embodiment, wherein its lower ended has been depressed.

Referring to FIG. 20, the lower end 1015 of the pattern portion has been depressed upwards, which may reduce blurring of an image that occurs as the light emitted from the panel is reflected by the lower end 1015 of the pattern portion. The depressed lower surface may also enhance the attachment between the external light shielding sheet and other functional sheets or panel since the area where the external light shielding sheet is attached to the functional sheets or panel increases.

The pattern portion 1010 may have its lowered end 1015 depressed by letting the height of the central part of the pattern portion 1010 smaller than the height of both sides of the pattern portion 1010.

The pattern portion 1010 may be formed by filling the groove of the base portion 1000 with a light-absorption material. At this time, the light-absorption material may be filled only in a part of the groove without being filled in the rest of the groove. The central part of the lower end 1015 is pressurized inside the groove by surface tension, so that the lower end may be depressed as shown in FIG. 20.

In a case where the lower end of the pattern portion 1030 is flat as shown in FIG. 21, the light diagonally incident from the panel onto the lower end of the pattern portion 1030 may be reflected toward the panel. The reflected light may cause an image that should be displayed at a specific area to be displayed around the specific area, and this may lead to image blurring, which may lower the sharpness of image.

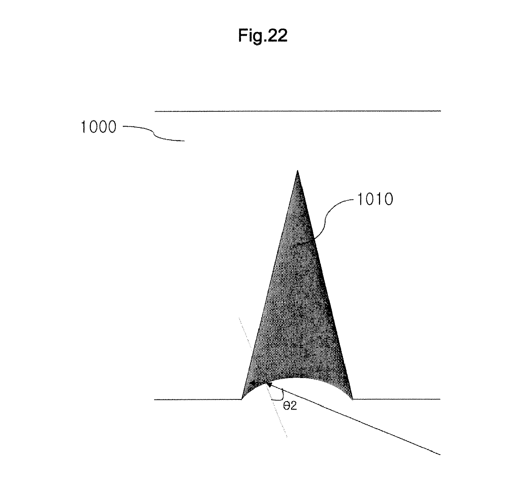

Referring to FIG. 22, an incident angle (θ2) of the light diagonally incident onto the depressed lower end 1010 is smaller than an incident angle (θ1) of the light incident onto the flat lower end 1030. Accordingly, the light incident from the panel onto the flat lower end is reflected by the flat lower end of the pattern portion 1030 as shown in FIG. 21, but the light incident from the panel onto the depressed lower end is absorbed into the pattern portion 1010. As a result, image blurring may be reduced, which may improve the image sharpness.

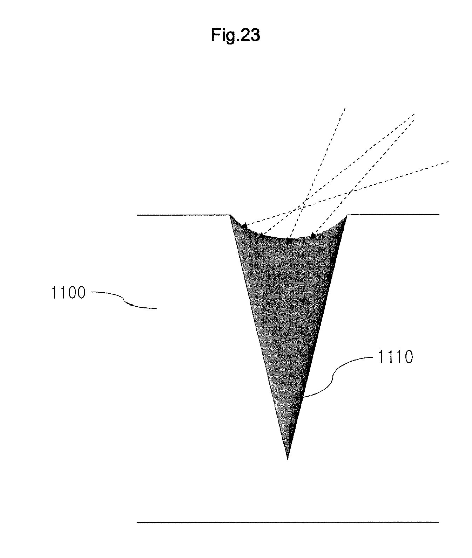

FIG. 23 is a cross sectional view illustrating an exemplary pattern portion according to an exemplary embodiment of the present invention, wherein its lower end has been depressed and located near the viewer.

The configuration of the pattern portion 1110 shown in FIG. 23, where the lower end of the pattern portion 1110 is depressed and located near the viewer, may enlarge the range of incident angle of the external light absorbed through the lower end of the pattern portion 1110. More specifically, if the lower end of the pattern portion 1110 is configured to be depressed inward, the incident angle of the external light incident from the panel onto the lower end of the pattern portion 1110 may be increased, which in turn may improve the external light absorption effects.

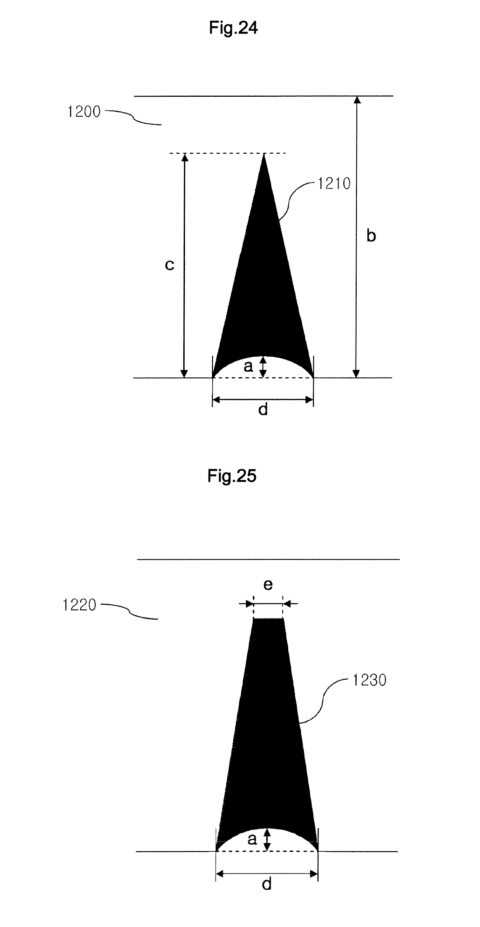

FIG. 24 illustrates an exemplary pattern portion according to an exemplary embodiment, wherein its lower ended has been depressed. Table 1 shows results of a test to determine whether or not image blurring has been reduced under predetermined conditions of the groove depth (a) and the width (d) that refers to a width of the lower end of the pattern portion 1210. It could be seen through this test that the depressed lower end of the pattern portion may be effective in reducing image blurring in contrast to the flat lower end of the pattern portion.

**[Table 1]**

| Groove depth (a) | Width (d) | Image blurring reduced? |
|---|---|---|
| 0.5µm | 27µm | × |
| 1.0µm | 27µm | × |
| 1.5µm | 27µm | ○ |
| 2.0µm | 27µm | ○ |
| 2.5µm | 27µm | ○ |
| 3.0µm | 27µm | ○ |
| 3.5µm | 27µm | ○ |
| 4.0µm | 27µm | ○ |
| 4.5µm | 27µm | ○ |
| 5.0µm | 27µm | ○ |
| 5.5µm | 27µm | ○ |
| 6.0µm | 27µm | ○ |
| 6.5µm | 27µm | ○ |
| 7.0µm | 27µm | ○ |
| 7.5µm | 27µm | × |
| 8.0µm | 27µm | × |
| 9.0µm | 27µm | × |
| 9.5µm | 27µm | × |

As can be seen in Table 1, image blurring may be reduced and image sharpness may be improved when the groove depth (a) ranges from about 1.5µm to about 7.0µm.

The groove depth (a) may be in a range of about 2µm to about 5µm in terms of the protection of the pattern portion 1210 from any damages due to external impacts and facilitation of processes to form the pattern portion 1210.

As described above with reference to FIG. 7, it can be possible to ensure a proper aperture ratio for panel and maximize the external light shielding efficiency when the width (d) of the lower end of the pattern portion 1210 is about 18µm to about 35µm. Accordingly, the width (d) may be about 3.6 times to about 17.5 times of the groove depth (a).

Since a slope may be formed, by which the absorption of the external light and the reflection of the light emitted from the panel may effectively take place when the height (c) of the pattern portion 1210 is about 80µm to about 170µm, the height (c) of the pattern portion 1210 may be about 16 times to about 85 times of the groove depth (a).

In addition, since the thickness (b) of the external light shielding sheet is about 100µm to about 180µm, the light emitted from the panel may smoothly pass through the external light shielding sheet, the external may be effectively absorbed and shielded, and the external light shielding sheet may be secure. Accordingly, the thickness (b) may be about 20 times to about 90 times of the groove depth (a).

Referring to FIG. 25, the pattern portion 1230 may be shaped as a trapezoid, wherein the width (e) of its upper end may be smaller than the width (d) of its lower end. The width (e) may be 10µm or less, which permits the pattern portion 1230 to have a slope by which the absorption of the external light and the reflection of the light emitted from the panel may effectively take place with respect to the width (d). The relationship between the groove depth (a) and the width (d) may be equal to that described above with reference to FIG. 24.

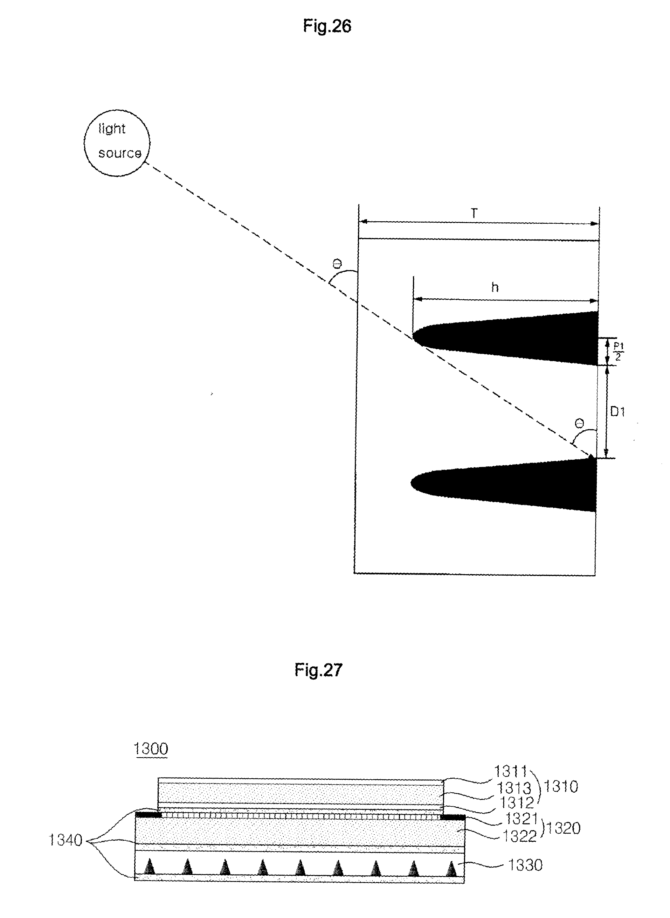

FIG. 26 is a cross sectional view illustrating an exemplary external light shielding sheet according to an exemplary embodiment of the present invention, wherein it can be seen how the thickness of the external light shielding sheet is associated with the height of the pattern portion.

Referring to FIG. 26, the thickness (T) of the external light shielding sheet may be about 100µm to 180µm so as to confer rigidity to the external light shielding sheet having the pattern portion as well as to ensure transmittance of visible light emitted from the panel for displaying an image.

When the height (h) of the pattern portion is about 80µm to about 170µm, it can be possible to form the pattern portion most easily, confer a proper aperture ratio to the external light shielding sheet, and maximize the external light shielding effect and the reflection effect of the light emitted from the panel.

The height (h) may vary with the thickness (T). A light source that emits the external light negatively affecting the contrast of panel is mainly located above the panel. Accordingly, the ratio between the height (h) and the thickness (T) may be within a prescribed value to effectively shield the external light incident onto the panel with a prescribed range of incident angle (θ).

As the height (h) of the pattern portion increases, the thickness of a part of the base portion located above the upper end of the pattern portion becomes thin which may cause a dielectric breakdown. On the contrary, as the height (h) decreases, the external light with a prescribed range of an angle is incident onto the panel, which may cause the external light shielding sheet to have a poor external light shielding effect.

Table 2 shows results of a test to determine the dielectric breakdown and external light shielding effect of the external light shielding sheet according to the height (h) and thickness (T).

**[Table 2]**

| Thickness (T) | 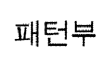 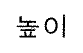 Height (h) | Dielectric breakdown | External light shielding effect |
|---|---|---|---|
| 120µm | 120µm | ○ | ○ |
| 120µm | 115µm | △ | ○ |
| 120µm | 110µm | × | ○ |
| 120µm | 105µm | × | ○ |
| 120µm | 100µm | × | ○ |
| 120µm | 95µm | × | ○ |
| 120µm | 90µm | × | ○ |
| 120µm | 85µm | × | △ |
| 120µm | 80µm | × | △ |
| 120µm | 75µm | × | △ |
| 120µm | 70µm | × | △ |
| 120µm | 65µm | × | △ |
| 120µm | 60µm | × | △ |
| 120µm | 55µm | × | △ |
| 120µm | 50µm | × | × |

Referring to Table 2, if the height (h) is 115µm when the thickness (T) is 120µm, the dielectric breakdown may take place in the pattern portion, which increase the incident of fault of the panel. If the height (h) is less than 115µm, there is no possibility of dielectric breakdown, and therefore, the incidence of fault of the panel may decrease. However, when the height of the pattern portion is less than 85µm, the external light shielding effect by the pattern portion may decrease, and when the height is less than 60µm, the external light may be incident onto the panel. Accordingly, when the height (h) ranges from about 90µm to about 110µm, it can be possible not only to increase the external light shielding efficiency but also to reduce the incidence of fault.

In addition, when the thickness (T) of the external light shielding sheet is about 1.01 times to about 2.25 times of the height (h), it can be possible to prevent the dielectric breakdown of the upper end of the pattern portion and the incidence of the external light. The thickness (T) may be about 1.01 times to about 1.5 times of the height (h) to increase the reflectivity of the light emitted from the panel and ensure a proper view angle in addition to preventing the dielectric breakdown and the incidence of the external light.

Table 3 shows results of a test to determine whether or not moiré patterns take place and the external light shielding sheet has an external light shielding effect according to the ratio between the width of the lower end of the pattern portion and the width of the bus electrode formed on the upper substrate of the panel, wherein the width of the bus electrode is 70µm.

**[Table 3]**

| Width of lower end/width of bus electrode | Moiré pattern | External light shielding effect |
|---|---|---|
| 0.10 | △ | × |
| 0.15 | △ | × |
| 0.20 | × | △ |
| 0.25 | × | ○ |
| 0.30 | × | ○ |
| 0.35 | × | ○ |
| 0.40 | × | ○ |
| 0.45 | △ | ○ |
| 0.50 | △ | ○ |
| 0.55 | ○ | ○ |
| 0.60 | ○ | ○ |

As can be seen in Table 3, when the width of the lower end of the pattern portion is about 0.2 times to about 0.5 times of the width of the bus electrode, moiré patterns may decrease and at the same time the external light that is incident onto the panel may decrease. The width of the lower end of the pattern portion may be about 0.25 times to about 0.4 times of the width of the bus electrode to ensure a proper aperture ratio as well as to prevent moiré patterns and effectively shield the external light.

Table 4 shows results of a test to determine whether or not moiré patterns take place and the external light shielding sheet has an external light shielding effect according to the ratio between the width of the lower end of the pattern portion and the width of the vertical barrier rib formed on the lower substrate of the panel, wherein the width of the vertical barrier rib is 50µm.

**[Table 4]**

| Width of lower end/width of vertical barrier rib | Moiré pattern | External light shielding effect |
|---|---|---|
| 0.10 | ○ | × |
| 0.15 | Δ | × |
| 0.20 | Δ | × |
| 0.25 | Δ | × |
| 0.30 | × | Δ |
| 0.35 | × | △ |
| 0.40 | × | ○ |
| 0.45 | × | ○ |
| 0.50 | × | ○ |
| 0.55 | × | ○ |
| 0.60 | × | ○ |
| 0.65 | × | ○ |
| 0.70 | △ | ○ |
| 0.75 | △ | ○ |
| 0.80 | △ | ○ |
| 0.85 | ○ | ○ |
| 0.90 | ○ | ○ |

As can be seen in Table 4, when the width of the lower end of the pattern portion is about 0.3 times to about 0.8 times of the width of the vertical barrier rib, moiré patterns may decrease and at the same time the external light that is incident onto the panel may decrease. The width of the lower end of the pattern portion may be about 0.4 times to about 0.65 times of the width of the vertical barrier rib to ensure a proper aperture ratio as well as to prevent moiré patterns and effectively shield the external light.

FIGS. 27 to 30 are cross sectional views illustrating an exemplary filter according to an exemplary embodiment of the present invention, wherein the filter, located on the front surface of the plasma display panel, may include an AR/NIR sheet, an EMI shielding sheet, an external light shielding sheet, and a light property sheet.

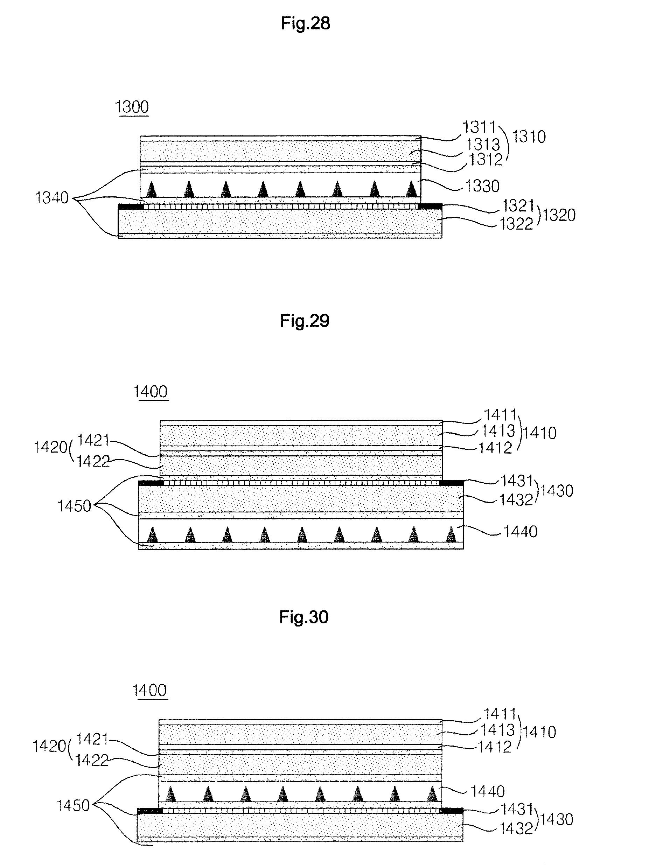

Referring to FIGS. 27 and 28, the AR/NIR sheet 1310 includes a base sheet 1313, an anti-reflection (AR) layer 1311, and a near-infrared (NIR) shielding sheet 1312. The base sheet 1313 is made of a transparent plastic material. The AR layer 1311 is formed on the front surface of the base sheet 1313 to prevent the external light from being reflected. The NIR shielding sheet 1312 is formed on the rear surface of the base sheet 1313 to shield infrared rays emitted from the panel, for example, so as to prevent the infrared rays from interfering with infrared rays generated from, for example, a remote controller to carry data.

The EMI shielding sheet 1320 includes a base sheet 1322 and an EMI shielding layer 1321. The base sheet 1322 is made of a transparent plastic material. The EMI shielding layer 1321 is formed on the front surface of the base sheet 1322 to prevent EMI generated from the panel from negatively affecting external devices (not shown)

Usually, the EMI shielding sheet 1321 is formed of a conductive material in a mesh structure. A conductive material is coated on the entire non-effective display area of the EMI shielding sheet 1320 which does not display images in order to achieve smooth grounding.

A light source that emits the external light is commonly located above the viewer. The external light shielding sheet 1330 is attached on the rear surface of the EMI shielding sheet 1320 to effective shield the external light to enable a black image created from the plasma display panel to look even darker.

Adhesive layers 1340 are interposed between the AR/NIR sheet 1310 and the EMI shielding sheet 1320, between the EMI shielding sheet 1320 and the external light shielding sheet 1330, and on the rear surface of the external light shielding sheet 1330, respectively, to permit the filter 1300 including the sheets 1310, 1320, and 1330 to be firmly attached on the front surface of the panel 1300. The base sheets included in the sheets 1310, 1320, and 1330 may be formed substantially of the same material to easily form the filter 1300.

Although the AR/NIR sheet 1310, the EMI shielding sheet 1320, and the external light shielding sheet 1330 are stacked in the order as shown in FIG. 27, the present invention is not limited thereto, but a diversity of stacking orders are available by those skilled in the art. For example, the sheets may be stacked in the order of the AR/NIR sheet 1310, the external light shielding sheet 1330, and the EMI shielding sheet 1320 as shown in FIG. 28. Or, at least one of the sheets 1310, 1320, and 1330 may be omitted from the filter 1300.

Referring to FIGS. 29 and 30, the filter 1400, arranged on the front surface of the panel, may further include a light property sheet 1420 in addition to the AR/NIR sheet 1410, the EMI shielding sheet 1430, and the external light shielding sheet 1440. The light property sheet 1420 improves the properties of the light emitted from the panel, such as color temperature and brightness. The light property sheet 1420 includes a base sheet 1422 and a light property layer 1421. The base sheet 1422 is made of a transparent plastic material. The light property layer 1421 that consists of a dye and an adhesive is deposited on the front surface or rear surface of the base sheet 1422.

At least one of the base sheets shown in FIGS. 27 to 30 may be omitted from the filters 1300 and 1400. At least one of the base sheets may be formed of glass to enhance the panel protection. The base sheet made of glass may be spaced from the panel by a prescribed distance.

The filter of the present invention may further include a diffusion sheet. The diffusion sheet serves to diffuse the incident light so that the incident light may maintain a constant brightness. The diffusion sheet may uniformly diffuse the light emitted from the panel, so that the vertical view angle of the PDP device may be broadened and the patterns formed on the external light shielding sheet may be concealed. In addition, the diffusion sheet collects the light toward an area corresponding to the vertical view angle to maintain and improve the brightness and enhance the anti-electrification function.

The diffusion sheet may be implemented of a transmissive or reflective diffusion film. The diffusion sheet may include a base sheet made of polymer and tiny glass particles contained in the base sheet. A high-purity acrylic resin (PMMA) may be utilized for the base sheet, which may increase the thickness of the base sheet increases, but provide a good thermal resistance, so that a number of large displays employ such base sheets.

As described above, the filter and the PDP device including the filter according to exemplary embodiments of the present invention may achieve an effective implementation of black images and improve the contrast by placing the external light shielding sheet on the front surface of the panel to maximally absorb and shield the external light. Moreover, the external light shielding effects may be improved and the ghost phenomena may be reduced since the lower end of the pattern portion included in the external light shielding sheet is arranged near the viewer.

The foregoing embodiments and advantages are merely exemplary and are not to be construed as limiting the present invention. The present teaching can be readily applied to other types of apparatuses. The description of the foregoing embodiments is intended to be illustrative, and not to limit the scope of the claims. Many alternatives, modifications, and variations will be apparent to those skilled in the art.

## Claims

1. A plasma display panel device comprising:
a plasma display panel; and
an external light shielding sheet having a base portion with a groove, and a pattern portion formed in the groove of the base portion, wherein
an upper end of the pattern portion is arranged nearer the panel than a lower end of the pattern portion, the lower end being broader in width than the upper end.

2. The plasma display panel device of claim 1, wherein
the pattern portion is larger in refractive index than the base portion.

3. The plasma display panel device of claim 1, wherein
a difference in refractive index between the base portion and the pattern portion ranges from about 0.05 to about 0.3.

4. The plasma display panel device of claim 1, wherein
a refractive index of the pattern portion ranges from more than about 1.0 times to less than about 1.3 times of a refractive index of the base portion.

5. The plasma display panel device of claim 1, wherein
an interval between the panel and the external light shielding sheet ranges from about 1.5mm to about 3.5mm.

6. The plasma display panel device of claim 1, wherein
the lower end of the pattern portion is depressed.

7. The plasma display panel device of claim 1, wherein
the panel comprises an upper substrate, a black matrix and a first electrode formed on the upper substrate, a lower substrate, and a second electrode formed on the lower substrate and a barrier rib formed to intersect the second electrode, wherein
an angle between the pattern portion and any one of the black matrix, the first electrode, and the barrier rib is equal to or less than about 20 degrees.

8. The plasma display panel device of claim 1, wherein a thickness of the external light shielding sheet is about 1.01 times to about 2.25 times of a height of the pattern portion.

9. The plasma display panel device of claim 1, wherein
an interval between two adjacent pattern portions is about 1.1 times to about 5 times of a width of the end lower of the pattern portion.

10. The plasma display panel device of claim 1, wherein
a height of the pattern portion is about 0.89 times to about 4.25 times of an interval between two adjacent pattern portions.

11. An external light shielding sheet arranged on a front surface of a display panel, comprising:
a base portion having a groove; and
a pattern portion formed in the groove of the base portion, the pattern portion being larger in refractive index than the base portion, wherein
an upper end of the pattern portion is arranged nearer the panel than a lower end of the pattern portion, the lower end being broader in width than the upper end.

12. The external light shielding sheet of claim 11, wherein
a difference in refractive index between the base portion and the pattern portion ranges from about 0.05 to about 0.3.

13. The external light shielding sheet of claim 11, wherein
a refractive index of the pattern portion ranges from more than about 1.0 times to less than about 1.3 times of a refractive index of the base portion.

14. The external light shielding sheet of claim 11, wherein
a thickness of the external light shielding sheet is about 1.01 times to about 2.25 times of a height of the pattern portion.

15. The external light shielding sheet of claim 11, wherein
an interval between two adjacent pattern portions is about 1.1 times to about 5 times of a width of the end lower of the pattern portion.
